# EUROPEAN PATENT SPECIFICATION

(11) **EP 2 670 241 B1**
(45) Date of publication and mention of the grant of the patent: **07.10.2015**
(21) Application number: 12702252.3
(22) Date of filing: 02.02.2012
(51) Int. Cl.: A01N 43/22, A01N 51/00, A01N 57/14, A01N 63/00, A01P 7/04, A01N 55/10, A01N 25/02, A01N 25/04, A01N 49/00, A01N 25/00, A01N 55/00

(54) **COMPOSITION CONTAINING A POLYORGANOSILOXANE, A LARVICIDE, AND AN ORGANIC SOLVENT**
ZUSAMMENSETZUNG MIT EINEM POLYORGANOSILOXAN, EINEM LARVIZID UND EINEM ORGANISCHEN LÖSUNGSMITTEL
COMPOSITION CONTENANT UN POLYORGANOSILOXANE, UN LARVICIDE ET UN SOLVANT ORGANIQUE

(30) Priority: 04.02.2011 US 201161439378 P; 16.02.2011 EP 11154653
(43) Date of publication of application: 11.12.2013
(73) Proprietor: BASF SE, 67056 Ludwigshafen (DE)
(72) Inventor: TARANTA, Claude, 76297 Stutensee (DE); MÜLLER, Helmut, 67256 Weisenheim (DE); KLEIN, Clark D., Pittsboro, NC 27312 (US); AUSTIN, James W., Wake Forest, NC 27587 (US); WEINMÜLLER, Egon, 67117 Limburgerhof (DE); STUTZ, Susanne, 69469 Weinheim (DE)
(86) International application number: PCT/EP2012/051747
(87) International publication number: WO 2012/104369

(56) References cited:
- EP-A1- 0 191 543
- WO-A1-85/02093
- WO-A1-2008/014566
- WO-A2-2008/024308
- US-A- 2 988 473
- US-A- 4 155 995
- US-A- 5 814 325

## Description

The present invention relates to a liquid composition containing a polyorganosiloxane, a larvicide, which contains temephos, spinosad, dinetofuran, methopren, *Bacillus thuringiensis, Bacillus thuringiensis israelensis*, or *Bacillus sphaericus,* and at least 10 wt% of a water-immiscible synthetic organic solvent, which comprises an aliphatic C₅₋₁₂ ketone, C₅₋₁₈ aliphatic hydrocarbon, ester of aliphatic C₆₋₂₄ alcohol with aliphatic C₁₋₆ acid, and/or an aliphatic di-C₂₋₁₈ ether. It also relates to a method for preparing said composition comprising mixing the polyorganosiloxane, the larvicide, and the organic solvent; and to a method for controlling insects, wherein the said composition is applied on a water surface. Combinations of preferred embodiments with other preferred embodiments are within the scope of the present invention.

The control of aquatic insects by silicon polymers is an important tool in public health management.

WO 2008/014566 suggests a composition for the protection of a body of water comprising 5 to 95 wt% silicone polymer, zero to 90 wt% carrier material and greater than zero to 20 wt% surfactant. This composition protects the liquid/gas interface from insect infestations and disrupts the mosquito lifecycle.

US 5814325 discloses processes for killing or repelling insects, for repelling insects from an animal or a human, involving a terpene and a mineral oil.

US 4155995 discloses a larvicidal composition comprising an ethoxylated mono-alkyl-phenol, a siloxane and a larvicidal refined petroleum oil.

US 2988473 teaches an insecticidal composition consisting of an insecticidal petroleum hydrocarbon oil and an organo-silicon oxide condensation product.

WO 2008/024308 discloses insecticidal compositions for controlling insects with aquatic breeding sites involving a toxin from *Bacillus thuringiensis* or *Bacillus sphaericus.*

EP 191543 describes a method for controlling insects by the use of silicon-containing toxicants.

WO 2008/024308 teaches a film forming composition containing colloidal silica particles and polyalkyleneoxide modified trisiloxane useful in hair styling, acricultural and home care applications.

WO 2008/014566 suggests a protective surface film comprising a silicon polymer, a carrier material and a surfactant, to cover a large body of water to prevent evaporation.

The efficacy of the state of the art may still be optimized. Object of the present invention was to improve the efficacy of compositions containing silicone polymers.

The object was solved by a liquid composition containing a polyorganosiloxane and a larvicide containing
- a polyorganosiloxane;
- a larvicide, which contains temephos, spinosad, dinetofuran, methopren, *Bacillus thuringiensis, Bacillus thuringiensis israelensis*, or *Bacillus sphaericus;* and
- at least 10 wt% of a water-immiscible synthetic organic solvent, which comprises an aliphatic C₅₋₁₂ ketone, C₅₋₁₈ aliphatic hydrocarbon, ester of aliphatic C₆₋₂₄ alcohol with aliphatic C₁₋₆ acid, and/or an aliphatic di-C₂₋₁₈ ether.

**Polyorganosiloxanes** are polymers, in which silicon atoms are linked via oxygen atoms, each silicon atom bearing one or several organic groups. They are also known as silicones and reviewed by Moretto et al., Ullmann's Encyclopedia of Industrial Chemistry, 2000, Keyword "Silicones".

The organo groups of the polyorganosiloxane comprise alkyl, aryl and/or polymeric groups. The polyorganosiloxane may be linear, cyclic (like trisiloxanes), branched or crosslinked. In a first preferred embodiment, the organo groups of the polyorganosiloxane comprise (preferably consist of) alkyl, and/or aryl groups. In a second preferred embodiment, the organo groups of the polyorganosiloxane comprise polymeric groups in addition to alkyl and/or aryl groups.

Examples of **alkyl** groups are C₁-C₁₂ alkyl, preferably methyl. Examples of aryl groups are phenyl or substituted phenyl groups, preferably phenyl. In particular, the polyorganosiloxane comprises polydimethylsiloxane (also known as dimethicone). The chemical composition of polydimethylsiloxane is generally represented by the formula (CH₃)₃SiO[SiO(CH₃)₂]ₙSi(CH₃)₃. The n has usually a value of at least 3, preferably at least 5. The value of n may be up to 5000, preferably up to 2000. Polydimethylsiloxanes are commercially available, e.g. from Dow Corning as Xiameter® PMX-200.

Preferred **polymeric** groups are polyether. Such compounds are also known as polyorganosiloxane-polyether. Typically, the polyether contains poly(ethylene oxide), poly(propylene oxide), or poly(ethylene oxide - co - propylene oxide), wherein the latter may be a statistical or block copolymer of the alkylene oxides. The polyorganosiloxane-polyether may be present as linear, branched or comb type polymers. The polymers may have a Si-O-C as well as Si-C linkages between the polysiloxane and the polyether segment. Examples of polyorganosiloxane-polyether are known from Moretto et al., Ullmann's Encyclopedia of Industrial Chemistry, 2000, Keyword "Silicones", chapter 6.1, especially in Table 9. Polyorganosiloxane-polyethers are commercially available, e.g. the Dow Corning® types Q4-3667 (ABA block polymer), 5103 Surfactant (graft polymer), Q2-5211 Superwetting Agent (trisiloxane), or from Evonik Break-thru® S 240 (trisiloxane), or Break-thru® OE (graft polymer).

The viscosity of the polyorganosiloxane may vary from 10 to 50.000 cSt, preferably from 40 to 15.000 cSt.

**Mixtures of polyorganosiloxanes** may be used or a single type of polyorganosiloxane. Preferably, at least two different polyorganosiloxanes are used. Preferred mixtures comprise a polydimethylsiloxane and a polyorganosiloxane-polyether. Usually, the ratio of polydimethylsiloxane to polyorganosiloxane-polyether is in the range from 50 to 1 to 1 to 10, preferably from 10 to 1 to 1 to 2, and in partucular from 5 to 1 to 2 to 1.

The composition may contain from 1 to 50 wt% polyorganosiloxanes in total. Preferably, it contains from 5 to 30 wt% polyorganosiloxanes in total, in particular from 10 to 20 wt%.

**Larvicides** are typically insecticides which kill larvae, for example mosquito larvae. Examples are synthetic larvicides (such as temephos, dinetofuran, spinosad or methopren) and microbial larvicides (such as *Bacillus thuringiensis, Bacillus thuringiensis israelensis, Bacillus sphaericus*). Larvicides are commercially available, such as under the brand names Altosid® (methoprene), Abate® (temephos), GF-120 NF Naturalyte® Fruit Fly Bait (mixture of spinosad A & D), Aquabac® (*Bacillus thuringiensis israelensis*), or Fourstar® (*Bacillus sphaericus*). The larvicide contains temephos, spinosad, dinetofuran, methopren, *Bacillus thuringiensis, Bacillus thuringiensis israelensis*, or *Bacillus sphaericus.*

Preferably, the larvicide is a synthetic larvicide, such as temephos, dinetofuran or methopren. In particular, the larvicide is temephos.

The composition may contain from 0.1 to 60 wt% larvicide. Preferably, it contains from 0.5 to 40 wt% larvicide, in particular from 3 to 20 wt%.

The weight **ratio of larvicide / polyorganosiloxane** may be from 50 / 1 to 1 / 50, preferably from 7 / to 1 / 7, and in particular from 2.5/1 to 1 / 2.5.

The composition is a liquid composition, such as a solution, emulsion, suspension or suspoe-mulsion. Preferably the liquid is a solution or emulsion, in particular a solution.

The composition may contain **water.** Usually, it contains up to 10 wt% water, preferably up to 5 wt%, and in particular up to 1 wt%. It is also possible that the composition is free of water.

The composition contains an **synthetic organic solvent.** Synthetic organic solvents may be synthetized by human-controlled chemical synthesis. Mineral or vegetable oils are usually not considered synthetic organic solvents. The organic solvents are water-immiscible organic solvents, such as organic solvents which have a solubility in water at 20 °C of up 10 wt%, preferably up to 4 wt%, more preferably up to 2 wt%, even more preferably up to 1,0 wt%, and in particular up to 0.5 wt%.

Synthetic organic solvents comprise C₅₋₁₂ ketone , such as 2-heptanone. Suitable esters are esters of aliphatic C₆₋₂₄ alcohols with aliphatic C₁₋₆ acids, such as isobornyl acetate.

Suitable ethers are di-C₂₋₁₈ ethers, such as di-n-hexyl ether, di-n-octyl ether, di-n-decyl ether, or di-n-lauryl ether.

Preferred aliphatic hydrocarbons are C₆₋₁₈ aliphatic hydrocarbons, more preferred C₇₋₁₄ aliphatic hydrocarbons, in particular 1-methyl-4-isopropenyl-1-cyclohexen ((*R*)- and/or ((*S*)-isomer).

Synthetic organic solvents comprise aliphatic C₅₋₁₂ ketones, C₅₋₁₈aliphatic hydrocarbons, esters of aliphatic C₆₋₂₄ alcohols with aliphatic C₁₋₆ acids, and/or aliphatic di-C₂₋₁₈ ethers.

Preferred synthetic organic solvents are 2-heptanone, 1-methyl-4-isopropenyl-1-cyclohexen, isobornyl acetate, and/or di-n-hexyl ether. Mixtures of aforementioned solvents are also possible.

The composition may contain up to 95 wt% of the organic solvent, preferably up to 85 wt%. The composition contains at least 10 wt% of the organic solvent, preferably at least 30 wt%, more preferably at least 45 wt%, and in particular at least 60 wt%.

The composition may contain **mineral or vegetable oil** in addition to the synthetic organic solvent. Examples of mineral oil are oils based on petroleum destilaltes, such as aromatic and/or aliphatic hydrocarbon fractions. Examples of vegetable oil is oil from sunflower, canola, rapeseed, palm, soybean, peanut, cottonseed, palm cernel, coconut, or olive. The composition may contain up to 15 wt% mineral or vegetable oil, preferably up to 5 wt%, more preferred up to 1 wt% and in particular up to 0.1 wt%. It is also possible that the composition is free of mineral or vegetable oil.

The composition may contain an **essential oil.** Suitable essential oils may be essential oils which are repellents to mosquitos. Examples of essential oils are citronella oil, eucalyptus oil, cinnamon oil, rosemary oil, lemongrass oil, cedar oil, peppermint oil, clove oil, and geranium oil. Preferred essential oil is eucalyptus oil.

The composition may contain up to 50 wt% essential oil, preferably up to 20 wt% and in particular up to 3 wt%. The composition may contain at least 0.01 wt% essential oil, preferably at least 0.1 wt% and in particular at least 1 wt%. In a further embodiment, the composition is free of essential oil.

The composition may comprise further common formulation **additives,** such as surfactants, UV-absorbers, thickeners, or bactericides.

**Surfactants** which are particularly suitable are anionic, cationic, nonionic and amphoteric surfactants, block polymers and polyelectrolytes. Preferred surfactants are non-ionic surfactants. Any polyorganosiloxanes are not considered as surfactant in the present invention.

Suitable **anionic** surfactants are alkali, alkaline earth or ammonium salts of sulfonates, sulfates, phosphates or carboxylates. Examples of sulfonates are alkylarylsulfonates, diphenylsulfonates, alpha-olefin sulfonates, sulfonates of fatty acids and oils, sulfonates of ethoxylated alkylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates and carboxylated alcohol or alkylphenol ethoxylates.

Suitable **nonionic** surfactants are alkoxylates, N-alkylated fatty acid amides, amine oxides, esters or sugar-based surfactants. Examples of alkoxylates are compounds such as alcohols, alkylphenols, amines (e.g. tallow amine), amides, arylphenols, fatty acids or fatty acid esters which have been alkoxylated. Ethylene oxide and/or propylene oxide may be employed for the alkoxylation, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of suitable cationic surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide or of the A-B-C type comprising alkanol, polyethylene oxide and polypropylene oxide. Suitable **polyelectrolytes** are polyacids or polybases. Examples of polyacids are alkali salts of polyacrylic acid. Examples of polybases are polyvinylamines or polyethyleneamines.

Usually, the composition contains up to 25 wt% surfactant, preferably up to 3 wt%, and in particular up to 0.1 wt%. Is it also possible that the composition is free of surfactants.

The composition may contain inert fillers, such as inorganic inert fillers. However, it is advantageous that the composition is contains only up to 3 wt% inert fillers, preferably up to 0.5 wt% and in particular up to 0.1 wt%. It is especially preferred that the composition is free of inert fillers. Examples of inert fillers are calcium carbonate, talc, fine coal particulates, fly ash or cenospheres. The particle size of these inert fillers may be between 2 and 50 µm.

Typically, the composition according to the invention contains

| | |
|---|---|
| 1 - 25 wt% | larvicide (e.g. temephos), |
| 1 - 25 wt% | polyorganosiloxane, and |
| up to 100 wt% | organic solvent. |

Preferably, the composition according to the invention contains

| | |
|---|---|
| 1 - 25 wt% | larvicide (e.g. temephos), |
| 1 - 25 wt% | polydimethylsiloxane, |
| 0.2 - 15 wt% | polyorganosiloxane-polyether, and |
| up to 100 wt% | organic solvent. |

In another preferred form, the liquid composition according to the invention contains

| | |
|---|---|
| 1 - 25 wt% | larvicide, which contains temephos, spinosad, dinetofuran, methopren, *Bacillus thuringiensis, Bacillus thuringiensis israelensis,* or *Bacillus sphaericus* (preferably temephos), |
| 1 - 25 wt% | polyorganosiloxane, and |
| 30 - 85 wt% | organic solvent. |

In another more preferred form, the composition according to the invention contains

| | |
|---|---|
| 1 - 25 wt% | larvicide, which contains temephos, spinosad, dinetofuran, methopren, *Bacil lus thuringiensis, Bacillus thuringiensis israelensis,* or *Bacillus sphaericus* (preferably temephos), |
| 1 - 25 wt% | polydimethylsiloxane, |
| 0.2 - 15 wt% | polyorganosiloxane-polyether, and |
| 30 - 85 wt% | organic solvent. |

The sum of all components, which are present in the composition according to the invention sum up to 100 wt%.

The present invention also relates to a **method for controlling insects,** wherein the composition according to the invention is applied on a water surface. Specifically, the invention relates to a method for controlling insects comprising the application of a liquid composition on a water surface, wherein the liquid composition contains
- a polyorganosiloxane;
- a larvicide, which contains temephos, spinosad, dinetofuran, methopren, *Bacillus thuringiensis, Bacillus thuringiensis Israelensls*, or *Bacillus sphaericus;* and
- at least 10 wt% of a water-immiscible synthetic organic solvent, which comprises an aliphatic C₅₋₁₂ ketone, C₅₋₁₈ aliphatic hydrocarbon, ester of aliphatic C₆₋₂₄ alcohol with aliphatic C₁₋₆ acid, and/or an aliphatic di-C₂₋₁₈ ether.

Typically, the insects are **aquatic insects.** Aquatic insects are those that spend some part of their life-cycle closely associated with water, either living beneath the surface or skimming along on top of the water. Aquatic insects can be found in the following taxonomic orders:
- *Collembola*, the Springtails;
- *Ephemeroptera,* the Mayflies;
- *Odonata,* the Dragonflies;
- *Plecoptera,* the Stoneflies;
- *Hemiptera,* the true Bugs;
- *Neuroptera*/*Megaloptera*, the Dobsonflies, Alderflies, and Spongillaflies;
- *Trichoptera,* the Caddisflies;
- *Lepidoptera*, the butterflies and Moths;
- *Coleoptera*, the Beetles;
- *Diptera,* the true Flies.

Preferably, the insects are mosquitos, black flies, *Aedes spp.* (e.g. *Ae. albopictus, aegypti, taeniorhynchus*), *Culex spp., Anopheles spp., Simuliidae ssp.,* or *Culicoides spp..*

Suitable examples of *Culicidaessp.* are:
*Aedes aegypti, Aedes africanus, Aedes albifasciatus, Aedes albopictus, Aedes angustivittatus, Aedes bromeliae, Aedes Canadensis, Aedes cooki, Aedes dorsalis, Aedes fijiensis, Aedes furcifer, Aedes harinasutai, Aedes infirmatus, Aedes japonicus, Aedes kochi, Aedes luteocephalus, Aedes mcintoshi, Aedes melanimon, Aedes niveus cpx., Aedes normanensis, Aedes oceanicus, Aedes poicilius, Aedes polynesiensis, Aedes samoanus, Aedes scapularis, Aedes scutellaris, Aedes stokesi, Aedes taeniorhynchus, Aedes taylori, Aedes togoi, Aedes triseriatus, Aedes trivittatus, Aedes tutuilae, Aedes upolensis, Aedes vexans, Aedes vigilax, Anopheles aconitus, Anopheles albimanus, Anopheles albitarsis, Anopheles annularis, Anopheles annulipes s.l., Anopheles aquasalis, Anopheles arabiensis, Anopheles argyritarsis, Anopheles atroparvus, Anopheles aztecus, Anopheles bancroftii, Anopheles barbirostris, Anopheles bellator, Anopheles benarrochi, Anopheles braziliensis, Anopheles calderoni, Anopheles campestris, Anopheles claviger, Anopheles crucians, Anopheles cruzil, Anopheles culicifacies s.*/*., Anopheles darlingi, Anopheles donaldi, Anopheles farauti s.l., Anopheles flavirostris, Anopheles fluviatilis, Anopheles freeborni, Anapheles funestus, Anopheles gambiae, Anopheles gambiae complex, Anopheles hancocki, Anopheles jeyporiensis, Anopheles karwari, Anopheles koliensis, Anopheles labranchiae, Anopheles lepidotus, Anopheles lesteri, Anopheles letifer, Anopheles leucosphyrus group (baimaii, balabacensis, dirus, lateens, leucosphyrus, sulawesi), Anopheles ludlowea, Anopheles maculates s.l., Anopheles maculipennis, Anopheles marajoara, Anopheles melas, Anopheles merus, Anopheles messeae, , Anopheles minimus, Anopheles moucheti, Anopheles multicolor, Anopheles neivai, Anopheles nigerrimus, Anopheles nili s.l., Anopheles nuneztovari s.l., Anopheles oswaldoi, Anopheles pattoni, Anopheles pharoensis s.l., Anopheles philippinensis, Anopheles pseudopunctipennis, Anopheles pulcherrimus, Anopheles punctimacula , Anopheles punctipennis, Anopheles punctulatus, Anopheles sacharovi, Anopheles sergentii, Anopheles sinensis, Anopheles stephensi, Anopheles subpictus s.*/*., Anopheles sundaicus s.l., Anopheles superpictus, Anopheles tessellatus, Anopheles triannulatus, Anopheles quadrimaculatus, Anopheles vagus, Anopheles walkeri, Anopheles wellcomei*, *Anopheles whartoni, Armigeres subalbatus, Coquillettidia crassipes, Coquillettidia fuscopennata, Coquillettidia perturbans, Coquillettidia venezuelensis, Culex annulirostris, Culex antennatus, Culex bitaeniorhynchus, Culex erythrothorax, Culex gelidus, Culex pipiens, Culex nigripalpus, Culex ocossa, Culex portesi, Culex quinquefasciatus, Culex restuans, Culex sitiens, Culex spissipes, Culex taeniopus, Culex tarsalis, Culex theileri, Culex tritaeniorhynchus, Culex univittatus, Culex vishnui complex, Culex vomerifer, Culicoides furens, Culiseta inornata, Culiseta melanura, Culiseta morsitans, Haemagogus leucocelaenus, Haemagogus janthinomys, Haemagogus spegazzinii, Mansonia annulata, Mansonia bonneae, Mansonia dives, Mansonia Indian, Mansonia titillans, Mansonia uniformis, Psorophora columbiae, Psorophora discolor, Psorophora ferox, Sabethes chloropterus, Trichoprosopon digitatum*

Suitable examples of *Simuliidae ssp.* are:
*Eusimilium spp., Prosimulium mixtum, Simulium arcticum, Similium callidum, Similium columbaczense, Similium damnosum, Similium erythrocephalum, Similium indicum, Similium jenningsi, Similium metallicum, Similium neavei, Similium ochraceum, Similium ornatum, Similium pecuarum, Similium rugglesi, Similium venustum, Simulium vittatum*

The insects may be present at any growth stage, such as eggs, egg rafts, larval instars, pupae, or adults.

The **water surface** may be for example the surface of a lake, river, sea, swamp, rice field, roadside ditch, swimming pool, pond, salt marsh, or water barrel.

The composition may be applied with **dose rate** of 0.01 to 30 l/ha, preferably 0.1 to 10 l/ha, and in particular 0.3 to 5 l/ha. The composition may be applied with conventional means, such as spraying. It may be applied by aerial spraying or from the ground. Usually, the composition may be applied as it is, that is without further dilution.

The present invention offers various **advantages:** The dose rate of the larvicide may be reduced. The dose rate of the polysiloxane may be reduced. The application is very easy and it is very efficient. The larvicide spreads easily and fast over a water surface. The composition may be applied as a ready to use formulation, which is more convenient than a tank mix of single compounds. There is a dual mode of action on developing larvae, namely the direct kill and the inhibition of the pupal eclosion. The efficiency is prolonged compared to either the larvicide or the polyorganosiloxane alone. The composition allows the homogeneous coformulation of a larvicide and a polyorganosiloxane, which have very different solubility profiles. Especially the polyorganosiloxane-polyether was found to be an excellent wetter for the composition. The formulation is storage stable.

The invention is further illustrated but not limited by the following examples.

### Examples 1-5: Preparation of formulations

The liquid compositions were prepared by mixing the components as listed in Table 1.
Silicone A: Polydimethylsiloxane with a molecular weight of about 5-7 kDa, non-aquous clear liquid, 80 wt% concentration, Bp above 65 °C.
Silicone B: alkoxylated Polydimethylsiloxan (also known as Polydimethylsiloxan-polyether), soluble in water (room temperature, 10 wt%), dynamic Viscosity 2000-3500 mPas (25 °C).

**Table 1:**

| Component | Example 1 | Example 2 | Example 3 | Example 4 | Example 5 |
|---|---|---|---|---|---|
| Temephos | 10,4 g | 10,4 g | 10,4 g | 10,4 g | 10,4 g |
| Silicone A | 10,0 g | 10,0 g | 10,0 g | 10,0 g | 10,0 g |
| Silicone B | 3,0 g | 3,0 g | 3,0 g | 3,0 g | 3,0 g |
| D-(+)-1-Methyl-4-isopropenyl-1-cyclohexen | 38,3 g | 25,5 g | - | - | - |
| 2-Heptanone | 38,3 g | 25,5 g | 66,6 g | 56,6 g | 46,6 g |
| Isobornylacetate | - | 25,5 g | - | - | - |
| Di-n-hexylether | - | - | 10,0 g | 20,0 g | 30,0 g |

### Example 6: Biological testing

Food grade white plastic containers of 68 L capacity and with a water surface area of 0,22 m² were filled with 50 I of tap water. They were placed in a domestic gazebo under a roof and open to the environment. The containers received direct sunshine for up to 6 hours per day. Fifty late third instar *Cx. quinquefasciatus* late stage 3 larvae were then added to each container. The Larvae were provided with adequate food at the start of the tests.

The testing was started when the larvicides formulations from Examples 1-5 or the comparative formulations were applied to the containers at an application rate of 0,3 l/ha using an Gilson automatic pipette. The containers were monitored daily for larval mortality, with the number of dead larvae being recorded. Dead larvae were not removed from the containers. Once the larvae started to pupate, a piece of fine gauze netting was placed over each container to prevent escape of emerging adults, while still permitting observation of adult emergence. There were 5 replicates for each treatment and for the untreated control. The average dead larvae are summarized in Table 2.

For comparison, an untreated control ("Untreated), Silicone A ("Comp-Silicone"), and an aqueous emulsion concentrate containing 500 g/l temephos ("Comp-Temephos") was used at the same application rate of 0,3 liters/ha. Comp-Temephos was free of any polyorganosiloxane. The applied amount of temephos was only 30 g/ha of the Examples 1-5, whereas the comparative Comp-Temephos had to be applied at 240 g/ha for full activity.

**Table 2: Average number (out of 5 replica) of dead Culex quinquefasciatus larvae within 10 days**

| Treatment | 1 | 2 | 3 | 4 | 5 | 6 | 7 | 8 | 9 | 10 |
|---|---|---|---|---|---|---|---|---|---|---|
| Ex. 1 | 50 | 50 | 50 | 50 | 50 | 50 | 50 | 50 | 50 | 50 |
| Ex. 2 | 50 | 50 | 50 | 50 | 50 | 50 | 50 | 50 | 50 | 50 |
| Ex. 3 | 50 | 50 | 50 | 50 | 50 | 50 | 50 | 50 | 50 | 50 |
| Ex. 4 | 50 | 50 | 50 | 50 | 50 | 50 | 50 | 50 | 50 | 50 |
| Ex. 5 | 50 | 50 | 50 | 50 | 50 | 50 | 50 | 50 | 50 | 50 |
| Untreated | 0 | 0 | 0 | 0 | 0 | 0,4 | 0,8 | 0,8 | 1,4 | 2,0 |
| Comp-Silicone | 2 | 12 | 21 | 25 | 25 | 29 | 31 | 34 | 35 | 36 |
| Comp-Temephos | 50 | 50 | 50 | 50 | 50 | 50 | 50 | 50 | 50 | 50 |

### Example 7: Biological testing

The setup and testing procedure of Example 6 was used to test the effects on *Aedes vigilax* late stage 3 larvae. Instead of tap water, a mixture of 15 I seawater and 35 I tap water was used.

**Table 3: Average number (out of 5 replica) of dead Aedes vigilax larvae within 10 days**

| Treatment | 1 | 2 | 3 | 4 | 5 | 6 | 7 | 8 | 9 | 10 |
|---|---|---|---|---|---|---|---|---|---|---|
| Ex. 1 | 50 | 50 | 50 | 50 | 50 | 50 | 50 | 50 | 50 | 50 |
| Ex. 2 | 50 | 50 | 50 | 50 | 50 | 50 | 50 | 50 | 50 | 50 |
| Ex. 3 | 50 | 50 | 50 | 50 | 50 | 50 | 50 | 50 | 50 | 50 |
| Ex. 4 | 50 | 50 | 50 | 50 | 50 | 50 | 50 | 50 | 50 | 50 |
| Ex. 5 | 50 | 50 | 50 | 50 | 50 | 50 | 50 | 50 | 50 | 50 |
| Untreated | 2,6 | 4,6 | 5,0 | 7,6 | 9 | 10 | 10 | 15 | 20 | 21 |
| Comp-Silicone | 8 | 11 | 13 | 19 | 22 | 22 | 29 | 33 | 38 | 41 |
| Comp-Temephos | 50 | 50 | 50 | 50 | 50 | 50 | 50 | 50 | 50 | 50 |

### Example 8: Biological testing

Tubs used for this project were 28 I galvanized metal wash tubs, 43 cm diameter and 23 cm deep. The test site was was overgrown with weeds and trees which provided consistent shade throughout the test period. At the test site, tubs were placed within a framed cage. The frame was enclosed on all four vertical sides with plastic mesh screening (0.5 inch mesh openings) in order to allow egg-laying female mosquitoes in and keep potential contaminating animals out. The top of the frame enclosure was covered with plastic sheeting. Initially, test tubs were filled with water and a leaf/grass mixture. Pre-treatment, the tubs were surveyed until a variety of immature stages, including pupae, were observed. The most abundant mosquito larvae in the tubs was *Culex pipiens*, and a few *Aedes triceriatus* mosquitoe larvae were observed. The tubs were treated with 0,3 I/ha and the surveillance was done for up to nine weeks.

The surveillance tool was a plastic cup (350ml) mosquito dipper. Water was carefully dipped from each test tub, immature mosquitoe larvae (second larval stage L2) counted in the dipper and dipper contents placed into a plastic pan. Five dips were taken from each tub and subsequently placed into the plastic pan. Following the five dips, water in the pan was carefully dumped back into the test tub. Seven test tubs were used for each treatment. The average number of live larvae was summarized in Table 4.

**Table 4: Average number (from 7 replica) of live larvae within 9 weeks after treatment**

| Treatment | 1 | 2 | 3 | 4 | 5 | 6 | 7 | 8 | 9 |
|---|---|---|---|---|---|---|---|---|---|
| Ex. 1 | 0 | 0 | 0 | 0 | 0,2 | 1 | 3 | 0,8 | - |
| Ex. 2 | 0 | 0 | 0,2 | 0 | 0,2 | 0 | 0,8 | 0,2 | 0 |
| Ex. 3 | 0 | 0 | 0,2 | 0 | 0,2 | 0,4 | 0,6 | 0,2 | 0 |
| Ex. 4 | 0 | 0 | 0,2 | 0 | 2 | 0,4 | 2 | 0,4 | - |
| Ex. 5 | 0 | 0 | 0 | 0 | 0,4 | 0,4 | - | - | - |
| Untreated | 2 | 9 | 14 | 14 | 15 | 9 | 4 | 3 | 6 |

## Claims

1. A method for controlling insects comprising the application of a liquid composition on a water surface, wherein the composition contains
- a polyorganosiloxane;
- a larvicide, which contains temephos, spinosad, dinetofuran, methopren, *Bacillus thuringiensis, Bacillus thuringiensis israelensis*, or *Bacillus sphaericus*; and
- at least 10 wt% of a water-immiscible synthetic organic solvent, wherein the synthetic organic solvent comprises an aliphatic C₅₋₁₂ ketone, C₅₋₁₈ aliphatic hydrocarbon, ester of aliphatic C₆₋₂₄ alcohol with aliphatic C₁₋₆ acid, and/or an aliphatic di-C₂₋₁₈ ether.

2. The method according to claim 1, wherein the insects are aquatic insects.

3. The method according to claim 1 or 2, wherein the water surface is that of a lake, river, sea, swamp, rice field, roadside ditch, swimming pool, salt marsh, or water barrel.

4. The method according to any of claims 1 to 3, wherein the composition is applied with dose rate of 0,1 to 5 l/ha.

5. The method according to any of claims 1 to 4, wherein the composition contains up to 5 wt% water.

6. The method according to any of claims 1 to 5, wherein the larvicide is temephos.

7. The method according to any of claims 1 to 6, wherein the synthetic organic solvent comprises a mixture of synthetic organic solvents.

8. The method according to any of claims 1 to 7, wherein the polysiloxane comprises polydimethylsiloxane.

9. The method according to any of claims 1 to 8, wherein the polysiloxane comprises polydimethylsiloxane and polyorganosiloxane-polyether.

10. The method according to any of claims 1 to 9, wherein the weight ratio of larvicide / polyorganosiloxane is from 50 / to 1 / 50.

11. A liquid composition containing
- a polyorganosiloxane;
- a larvicide, which contains temephos, spinosad, dinetofuran, methopren, *Bacillus thuringiensis, Bacillus thuringiensis israelensis,* or *Bacillus sphaericus*; and
- at least 10 wt% of a water-immiscible synthetic organic solvent, wherein the organic solvent comprises an aliphatic C₅₋₁₂ ketone, C₅₋₁₈ aliphatic hydrocarbon, ester of aliphatic C₆₋₂₄ alcohol with aliphatic C₁₋₆ acid, and/or an aliphatic di-C₂₋₁₈ ether.

12. The composition according to claim 11, wherein the larvicide is temephos.

13. The composition according to claim 11 or 12, wherein the organic solvent comprises a mixture of synthetic organic solvents.

14. The composition according to any of claims 11 to 13, wherein the polysiloxane comprises polydimethylsiloxane.

15. The composition according to any of claims 11 to 14, wherein the polysiloxane comprises polydimethylsiloxane and polyorganosiloxane-polyether.

16. A method for preparing the liquid composition as defined in any of claims 11 to 15, comprising mixing the polyorganosiloxane, the larvicide, and the organic solvent.

## Patentansprüche

1. Verfahren zum Bekämpfen von Insekten, bei dem man eine flüssige Zusammensetzung auf eine Wasseroberfläche ausbringt, wobei die Zusammensetzung
- ein Polyorganosiloxan;
- ein Larvizid, das Temephos, Spinosad, Dinetofuran, Methopren, *Bacillus thuringiensis, Bacillus thuringiensis israelensis* oder *Bacillus sphaericus* enthält; und
- mindestens 10 Gew.-% eines nicht mit Wasser mischbaren synthetischen organischen Lösungsmittels, wobei das synthetische organische Lösungsmittel ein aliphatisches C₅₋₁₂-Keton, einen aliphatischen C₅₋₁₈-Kohlenwasserstoff, einen Ester eines aliphatischen C₆₋₂₄-Alkohols mit einer aliphatischen C₁₋₆-Säure und/oder einen aliphatischen Di-C₂₋₁₈-Ether umfasst,
enthält.

2. Verfahren nach Anspruch 1, wobei es sich bei den Insekten um aquatische Insekten handelt.

3. Verfahren nach Anspruch 1 oder 2, wobei es sich bei der Wasseroberfläche um diejenige eines Sees, eines Flusses, eines Meeres, eines Sumpfs, eines Reisfelds, eines Straßengrabens, eines Schwimmbeckens, einer Salzmarsch oder eines Wasserfasses handelt.

4. Verfahren nach einem der Ansprüche 1 bis 3, wobei die Zusammensetzung in einer Aufwandmenge von 0,1 bis 5 1/ha ausgebracht wird.

5. Verfahren nach einem der Ansprüche 1 bis 4, wobei die Zusammensetzung bis zu 5 Gew.-% Wasser enthält.

6. Verfahren nach einem der Ansprüche 1 bis 5, wobei es sich bei dem Larvizid um Temephos handelt.

7. Verfahren nach einem der Ansprüche 1 bis 6, wobei das synthetische organische Lösungsmittel eine Mischung aus synthetischen organischen Lösungsmitteln umfasst.

8. Verfahren nach einem der Ansprüche 1 bis 7, wobei das Polysiloxan Polydimethylsiloxan umfasst.

9. Verfahren nach einem der Ansprüche 1 bis 8, wobei das Polysiloxan Polydimethylsiloxan und Polyorganosiloxanpolyether umfasst.

10. Verfahren nach einem der Ansprüche 1 bis 9, wobei das Gewichtsverhältnis von Larvizid/Polyorganosiloxan 50/1 bis 1/50 beträgt.

11. Flüssige Zusammensetzung, die
- ein Polyorganosiloxan;
- ein Larvizid, das Temephos, Spinosad, Dinetofuran, Methopren, *Bacillus thuringiensis, Bacillus thuringiensis israelensis* oder *Bacillus sphaericus* enthält; und
- mindestens 10 Gew.-% eines nicht mit Wasser mischbaren synthetischen organischen Lösungsmittels, wobei das organische Lösungsmittel ein aliphatisches C₅₋₁₂-Keton, einen aliphatischen C₅₋₁₈-Kohlenwasserstoff, einen Ester eines aliphatischen C₆₋₂₄-Alkohols mit einer aliphatischen C₁₋₆-Säure und/oder einen aliphatischen Di-C₂₋₁₈-Ether umfasst,
enthält.

12. Zusammensetzung nach Anspruch 11, wobei es sich bei dem Larvizid um Temephos handelt.

13. Zusammensetzung nach Anspruch 11 oder 12, wobei das organische Lösungsmittel eine Mischung von synthetischen organischen Lösungsmitteln umfasst.

14. Zusammensetzung nach einem der Ansprüche 11 bis 13, wobei das Polysiloxan Polydimethylsiloxan umfasst.

15. Zusammensetzung nach einem der Ansprüche 11 bis 14, wobei das Polysiloxan Polydimethylsiloxan und Polyorganosiloxanpolyether umfasst.

16. Verfahren zur Herstellung der wie in einem der Ansprüche 11 bis 15 definierten Zusammensetzung, bei dem man das Polyorganosiloxan, das Larvizid und das organische Lösungsmittel mischt.

## Revendications

1. Méthode de contrôle d'insectes, comprenant l'application d'une composition liquide sur une surface d'eau, dans laquelle la composition contient :
- un polyorganosiloxane ;
- un larvicide, qui contient du téméphos, du spinosad, du dinotéfuran, du méthoprène, *Bacillus thuringiensis*, *Bacillus thuringiensis israelensis* ou *Bacillus sphaericus* ; et
- au moins 10% en poids d'un solvant organique synthétique non miscible avec l'eau, où le solvant organique synthétique comprend une C₅₋₁₂ cétone aliphatique, un hydrocarbure en C₅₋₁₈ aliphatique, un ester d'un C₆₋₂₄ alcool aliphatique avec un C₁₋₆ acide aliphatique, et/ou un di-C₂₋₁₈ éther aliphatique.

2. Méthode selon la revendication 1, dans laquelle les insectes sont des insectes aquatiques.

3. Méthode selon la revendication 1 ou 2, dans laquelle la surface d'eau est celle d'un lac, d'une rivière, d'une mer, d'un marais, d'un champ de riz, d'un fossé bordant une route, d'une piscine, d'un marais salant ou d'un baril d'eau.

4. Méthode selon l'une quelconque des revendications 1 à 3, dans laquelle la composition est appliquée selon un taux de dose allant de 0,1 à 5 l/ha.

5. Méthode selon l'une quelconque des revendications 1 à 4, dans laquelle la composition contient jusqu'à 5% en poids d'eau.

6. Méthode selon l'une quelconque des revendications 1 à 5, dans laquelle le larvicide est le téméphos.

7. Méthode selon l'une quelconque des revendications 1 à 6, dans laquelle le solvant organique synthétique comprend un mélange de solvants organiques synthétiques.

8. Méthode selon l'une quelconque des revendications 1 à 7, dans laquelle le polysiloxane comprend du polydiméthylsiloxane.

9. Méthode selon l'une quelconque des revendications 1 à 8, dans laquelle le polysiloxane comprend du polydiméthylsiloxane et du polyorganosiloxane-polyéther.

10. Méthode selon l'une quelconque des revendications 1 à 9, dans laquelle le rapport pondéral larvicide/ polyorganosiloxane va de 50/1 à 1/50.

11. Composition liquide, contenant
- un polyorganosiloxane ;
- un larvicide, qui contient du téméphos, du spinosad, du dinotéfuran, du méthoprène, *Bacillus thuringiensis, Bacillus thuringiensis israelensis* ou *Bacillus sphaericus* ; et
- au moins 10% en poids d'un solvant organique synthétique non miscible avec l'eau, où le solvant organique comprend une C₅₋₁₂ cétone aliphatique, un hydrocarbure en C₅₋₁-, aliphatique, un ester d'un C₆₋₂₄ alcool aliphatique avec un C₁₋₆ acide aliphatique, et/ou un di-C₂₋₁₈ éther aliphatique.

12. Composition selon la revendication 11, dans laquelle le larvicide est le téméphos.

13. Composition selon la revendication 11 ou 12, dans laquelle le solvant organique comprend un mélange de solvants organiques synthétiques.

14. Composition selon l'une quelconque des revendications 11 à 13, dans laquelle le polysiloxane comprend du polydiméthylsiloxane.

15. Composition selon l'une quelconque des revendications 11 à 14, dans laquelle le polysiloxane comprend du polydiméthylsiloxane et du polyorganosiloxane-polyéther.

16. Méthode de préparation de la composition liquide telle que définie selon l'une quelconque des revendications 11 à 15, comprenant le mélange du polyorganosiloxane, du larvicide et du solvant organique.
